# EUROPÄISCHE PATENTSCHRIFT

(11) **EP 2 989 328 B1**
(45) Veröffentlichungstag und Bekanntmachung des Hinweises auf die Patenterteilung: **18.09.2019**
(21) Anmeldenummer: 14715597.2
(22) Anmeldetag: 07.04.2014
(51) Int. Cl.: F04C 2/22, F04C 2/34, F04C 15/00, F04B 43/12, F04C 5/00, F01N 3/20, F04B 43/14

(54) **PUMPE ZUR DOSIERUNG EINES FLÜSSIGEN ADDITIVS FÜR EINE SELEKTIVE KATALYTISCHE REDUKTIONS VORRICHTUNG**
PUMP FOR DOSING A LIQUID ADDITIVE OF A SELECTIVE CATALYTIC REDUCTION DEVICE
POMPE POUR DOSER UN ADDITIFLIQUIDE D'UN DISPOSITIF DE RÉDUCTION SÉLECTIVE CATALYTIQUE

(30) Priorität: 26.04.2013 DE 102013104242
(43) Veröffentlichungstag der Anmeldung: 02.03.2016
(73) Patentinhaber: Continental Automotive GmbH, 30165 Hannover (DE)
(72) Erfinder: BRÜCK, Rolf, 51429 Bergisch Gladbach (DE); HODGSON, Jan, 53840 Troisdorf (DE)
(86) Internationale Anmeldenummer: PCT/EP2014/056888
(87) Internationale Veröffentlichungsnummer: WO 2014/173666

(56) Entgegenhaltungen:
- DE-A1-102011 010 644
- GB-A- 744 414
- GB-A- 768 253
- US-A- 3 549 279
- US-A- 4 332 534

## Beschreibung

Die Erfindung betrifft eine Vorrichtung zur dosierten Bereitstellung einer Flüssigkeit. Eine solche Vorrichtung kann auch als Fördervorrichtung und/oder als Dosiervorrichtung bezeichnet werden. Eine solche Vorrichtung kann beispielsweise in einem Kraftfahrzeug eingesetzt werden, um einer Abgasbehandlungsvorrichtung des Kraftfahrzeugs ein flüssiges Additiv zur Abgasreinigung zuzuführen. In Abgasbehandlungsvorrichtungen, die zum Betrieb ein flüssiges Additiv benötigen, wird beispielsweise das Verfahren der selektiven katalytischen Reduktion (SCR-Verfahren; SCR = Selective Catalytic Reduction) durchgeführt. Bei diesem Verfahren werden Stickstoffoxidverbindungen im Abgas einer Verbrennungskraftmaschine unter Zuhilfenahme eines Reduktionsmittels reduziert. Als Reduktionsmittel wird üblicherweise Ammoniak verwendet. Ammoniak wird in Kraftfahrzeugen normalerweise nicht direkt bevorratet, sondern in Form einer Reduktionsmittelvorläuferlösung, die als Flüssigkeit in einem Tank gespeichert und mit einer entsprechenden Vorrichtung bereitgestellt wird, die gemäß dem hier beschriebenen Verfahren betrieben werden kann. Eine Flüssigkeit, die in diesem Zusammenhang besonders häufig zum Einsatz kommt, ist Harnstoff-Wasser-Lösung, die für den Zweck der Abgasreinigung mit einem Harnstoffgehalt von 32,5 % unter dem Handelsnamen AdBlue® erhältlich ist.

Für die erfolgreiche Abgasreinigung ist eine möglichst genau dosierte Zugabe der Flüssigkeit zu einer Abgasbehandlungsvorrichtung gewünscht, dass heißt, dass die Menge der zugegebenen Flüssigkeit einem Bedarf in der Abgasbehandlungsvorrichtung möglichst genau entspricht. Darüber hinaus sollte eine Vorrichtung zur dosierten Bereitstellung einer Flüssigkeit möglichst kostengünstig herstellbar und betreibbar sein und möglichst nicht durch gefrierende Flüssigkeit innerhalb der Vorrichtung beschädigt werden können, weil die beschriebenen (wässrigen) Flüssigkeiten bei niedrigen Temperaturen einfrieren können. Niedrige Temperaturen treten in Kraftfahrzeugen beispielsweise während längerer Stillstandphasen auf.

Zur Förderung derartiger Flüssigkeiten haben sich Vorrichtungen als besonders vorteilhaft herausgestellt, die eine verzweigungsfreie Förderleitung von einem Tank zu einem Injektor an einer Abgasbehandlungsvorrichtung aufweisen. Derartige Vorrichtungen zur Bereitstellung haben typischerweise keine Rücklaufleitung, welche eine Kreisförderung von Flüssigkeit durch die Vorrichtung und zurück in den Tank ermöglicht. Eine solche Rücklaufleitung wurde vorgesehen, weil hierüber Luftblasen in der Vorrichtung leicht und sicher entfernt werden konnten. Jedoch stellt eine solche Rücklaufleitung einen erhöhten Kostenaufwand dar.

Die Dosierung der Flüssigkeit mit Hilfe der Vorrichtung erfolgt vorzugsweise mit Hilfe eines Injektors (Dosierventils), welcher elektronisch angesteuert geöffnet und geschlossen werden kann. Die von der Vorrichtung abgegebene Menge an Flüssigkeit ist dabei typischerweise proportional zur Öffnungszeit des Injektors. Dafür muss der an dem Injektor anliegende Druck der Flüssigkeit möglichst genau einer Vorgabe entsprechen, weil die von einem Injektor während einer vorgegebenen Öffnungszeit dosierte Menge an Flüssigkeit eine starke Abhängigkeit von dem Druck der Flüssigkeit an dem Injektor aufweist.

Zwischen mehreren einzelnen Dosiervorgängen des Injektors ist es wünschenswert, dass der Druck der Flüssigkeit in einen Druckleitungsabschnitt zwischen einer Pumpe und dem Injektor im Wesentlichen konstant gehalten wird, damit der Injektor unmittelbar dann, wenn eine Dosieranforderung an den Injektor gestellt wird, Flüssigkeit wie gewünscht dosieren kann.

Vorrichtungen zur Bereitstellung einer Flüssigkeit weisen zur Förderung der Flüssigkeit und zur Aufrechterhaltung des Drucks an dem Injektor typischerweise mindestens eine Pumpe auf. Die für derartige Vorrichtungen üblicherweise verwendeten Pumpen haben allerdings den Nachteil, dass durch die Pumpe hindurch eine Rückströmung an Flüssigkeit auftreten kann. Durch diese Rückströmung wird der Druck an dem Injektor verfälscht und somit die Dosiergenauigkeit verringert.

Das Dokument US 4,332,534 offenbart eine Pumpe zur Förderung einer Flüssigkeit aufweisend, ein Pumpengehäuse mit mindestens einem Einlass und mindestens einem Auslass, wobei in dem Pumpengehäuse ein Exzenter drehbar angeordnet ist, der von einer verformbaren Membran umgeben ist, wobei die verformbare Membran und das Pumpengehäuse mindestens einen Förderweg von dem mindestens einen Einlass zu dem mindestens einen Auslass begrenzen und mindestens eine Abdichtung des Förderwegs ausbilden.

Hiervon ausgehend ist es Aufgabe der hier vorliegenden Erfindung, die im Zusammenhang mit dem Stand der Technik geschilderten technischen Probleme zu lösen bzw. zumindest zu lindern. Es soll insbesondere eine Vorrichtung zur dosierten Bereitstellung einer Flüssigkeit offenbart werden, mit welcher eine präzise Dosierung der Flüssigkeit möglich ist, wobei der Energieverbrauch der Vorrichtung möglichst gering ist und die Vorrichtung möglichst kostengünstig ist.

Diese Aufgaben werden gelöst mit einer Vorrichtung gemäß den Merkmalen des Patentanspruchs 1. Weitere vorteilhafte Ausgestaltungen der Vorrichtung sind in den abhängigen Patentansprüchen angegeben. Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Vorgeschlagen wird demnach eine Vorrichtung zur dosierten Bereitstellung einer Flüssigkeit, zumindest aufweisend mindestens eine Pumpe zur Förderung der Flüssigkeit, wobei die mindestens eine Pumpe ein Pumpengehäuse mit mindestens einem Einlass und mindestens einem Auslass aufweist, wobei an dem Pumpengehäuse ein Exzenter angeordnet ist und wobei zwischen dem Pumpengehäuse und dem Exzenter eine verformbare Membran angeordnet ist, wobei die verformbare Membran und das Pumpengehäuse mindestens einen Förderweg von dem mindestens einen Einlass zu dem mindestens einen Auslass begrenzen und mindestens eine Abdichtung des Förderwegs ausbilden, wobei zumindest an einer der in Patentanspruch 1 genannten Positionen innerhalb der mindestens einen Pumpe eine Widerhakenstruktur vorgesehen ist, wobei die mindestens eine Abdichtung durch eine Bewegung des Exzenters zur Förderung entlang des Förderwegs mit einer Förderrichtung vom mindestens einen Einlass zu dem mindestens einen Auslass verschiebbar ist, wobei innerhalb der mindestens einen Pumpe ein Reibungsmoment auftritt, welches überwunden werden muss, damit der Exzenter sich bewegt, wobei dieses Reibungsmoment größer ist als ein maximales Druckmoment, das durch unter Druck stehende Flüssigkeit in dem Förderweg erzeugt werden kann, so dass eine Bewegung des Exzenters entgegen der Förderrichtung verhindert wird, wobei die Widerhakenstruktur dazu beiträgt, dass das Reibungsmoment entgegen der Förderrichtung größer ist als in Förderrichtung.

Die Vorrichtung weist vorzugsweise eine Saugleitung auf, die sich ausgehend von der mindestens einen Pumpe hin zu einem Tank erstreckt, in welchem die Flüssigkeit gespeichert ist. Die Saugleitung ist vorzugsweise an den Einlass der Pumpe angeschlossen. Vorzugsweise hat die Vorrichtung darüber hinaus eine Druckleitung, die sich ausgehend von der Pumpe hin zu einer Zugabestelle zur Zugabe der Flüssigkeit zu einer Abgasbehandlungsvorrichtung erstreckt. Diese Druckleitung ist an den Auslass der Pumpe angeschlossen. Grundsätzlich ist auch möglich, dass mehrere (parallele) Saugleitungen zu mehreren Pumpen (beispielsweise unterschiedlicher Förderleistung) führen, die jeweils (insbesondere verzweigungsfrei) über Druckleitungen mit einem einzelnen Injektor oder mehreren Injektoren verbunden sind. Bevorzugt sind weitere Verzweigungen des Leitungssystems der Vorrichtung nicht vorgesehen. Insbesondere existiert vorzugsweise keine Rücklaufleitung, die eine Verbindung des Auslasses der Pumpe zurück zu dem Tank herstellt.

Eine Pumpe mit dem beschriebenen Aufbau kann als Orbitalpumpe bezeichnet werden. Der Förderweg wird von einem Spalt zwischen der verformbaren Membran und dem Pumpengehäuse gebildet. Die verformbare Membran ist vorzugsweise zwischen dem Exzenter und dem Pumpengehäuse derart angeordnet, dass die verformbare Membran im Bereich der mindestens einen Abdichtung zwischen dem Gehäuse und dem Exzenter gequetscht ist. Der Spalt zwischen der verformbaren Membran und dem Pumpengehäuse wird dadurch im Bereich der mindestens einen Abdichtung fluiddicht verschlossen. Der Spalt bzw. der Förderweg ist während des Betriebs der Vorrichtung mit der Flüssigkeit gefüllt. Entlang des Förderwegs teilt die mindestens eine Abdichtung den Förderweg auf, so dass mindestens ein (geschlossenes) Fördervolumen gebildet ist. Durch die Verschiebung der Abdichtung durch eine Bewegung des Exzenters wird dieses Fördervolumen mit einer Förderrichtung ausgehend von dem Einlass der Pumpe hin zu dem Auslass der Pumpe verschoben. Dadurch findet eine Förderung der Flüssigkeit statt.

Das Pumpengehäuse der Pumpe ist vorzugsweise ein Ring oder eine zylindrische Kammer, in welcher der Exzenter innen (zentrisch) angeordnet ist. Das Pumpengehäuse kann dann als (äußerer) Stator der Pumpe angesehen werden, während der Exzenter als (innerer) Rotor bezeichnet werden kann. Gemäß einer weiteren Ausführungsform der beschriebenen Pumpe ist es allerdings auch möglich, dass das Pumpengehäuse einen inneren Stator der Pumpe bildet, welcher von dem Exzenter umgeben ist. Dann bildet der Exzenter einen äußeren Rotor. Der Einlass und der Auslass sind an dem Pumpengehäuse angeordnet und ermöglichen das Einströmen und das Ausströmen der Flüssigkeit in das Pumpengehäuse bzw. in den Förderweg zwischen der verformbaren Membran und dem Pumpengehäuse.

An der Pumpe ist vorzugsweise auch eine Trennung vorgesehen, die eine nicht gewollte Rückströmung der Flüssigkeit von dem Auslass zu dem Einlass verhindert. Diese Trennung kann beispielsweise als Eindellung in dem Pumpengehäuse oder als Aufdickung der verformbaren Membran ausgebildet sein. Diese Trennung ist (permanent bzw. ortsfest) zwischen dem Auslass und dem Einlass der Pumpe angeordnet. Die Trennung verhindert, dass durch die Bewegung des Exzenters relativ zu dem Pumpengehäuse zu irgendeinem Zeitpunkt eine direkte Verbindung für die Flüssigkeit von dem Auslass zu dem Einlass gebildet wird. Die Trennung kann auch dadurch gewährleistet sein, dass die verformbare Membran zwischen dem Auslass und dem Einlass an dem Gehäuse verspannt, verschraubt oder verklebt ist.

Der Exzenter ist vorzugsweise mehrteilig ausgeführt. Der Exzenter weist vorzugsweise einen (inneren) Exzenterbereich, welcher eine exzentrische Drehbewegung ausführt, und einen (äußeren) Lagerring, welcher den Exzenterbereich umgibt, auf. Zwischen dem Exzenterbereich und dem Lagerring befindet sich vorzugsweise mindestens ein Lager. Dieses Lager kann ein Kugellager oder ein Rollenlager sein. Der Exzenterbereich des Exzenters führt im Betrieb eine Drehbewegung um eine Rotationsachse aus. Durch eine äußere Form des Exzenters ergibt sich eine exzentrische Bewegung einer Oberfläche des Exzenterbereiches. Diese exzentrische Bewegung wird auf den Lagerring übertragen. Durch das Lager zwischen Exzenterbereich und Lagerring wird verhindert, dass die Drehbewegung von dem Exzenterbereich zusammen mit der exzentrischen Bewegung auf den Lagerring übertragen wird. Durch die Kombination eines Exzenterbereiches und eines Lagerrings mit dazwischen angeordnetem Lager kann eine exzentrische Drehbewegung des Exzenterbereiches in eine exzentrische Taumelbewegung des Lagerrings ohne Drehbewegungsanteil umgewandelt werden. Die Tatsache, dass die Bewegung des Lagerrings keinen Drehbewegungsanteil aufweist, ermöglicht es, Schubspannungen in der verformbaren Membran zu reduzieren. Vorzugsweise wird die verformbare Membran von dem Exzenter nur gewalkt. An einer Kontaktfläche des Exzenters zu der verformbaren Membran wirken vorzugsweise nur Druckkräfte und im Wesentlichen keine Reibungskräfte, die durch Reibung des Exzenters an der Membran auftreten würden, wenn die Kontaktfläche zu der verformbaren Membran auch einen Drehbewegungsanteil aufweisen würde. Eine entsprechende Aufteilung des Exzenters in Exzenterbereich und Lagerring ist auch möglich, wenn der Exzenter ein äußerer Rotor ist, der um ein Gehäuse herum angeordnet ist, welches einen inneren Stator bildet. Eine solche Aufteilung mit einem Exzenterbereich und einem Lagerring ist allerdings nicht für jede Ausführungsvariante einer beschriebenen Pumpe erforderlich.

Die unter Druck stehende Flüssigkeit in dem Förderweg übt Druckkräfte auf den Exzenter bzw. auf die verformbare Membran aus. Je nach Ausrichtung des Exzenters können diese Druckkräfte mit einer radialen Richtung und/oder mit einer tangentialen Richtung wirken. Dabei sind radiale Druckkräfte hin zur Rotationsachse des Exzenters ausgerichtet, während tangentiale Druckkräfte tangential zur Rotationsachse des Exzenters verlaufen. Tangentiale Druckkräfte erzeugen ein Druckmoment, welches auf den Exzenter wirkt und welches dazu geeignet ist, den Exzenter in Drehung zu versetzen. Ein entsprechendes Druckmoment kann auch eine Drehung entgegengesetzt zu der Förderrichtung des Exzenters erzeugen. Durch eine solche Drehung wird der von der Pumpe in dem Druckleitungsabschnitt erzeugte Druck reduziert.

Das beschriebene Reibungsmoment verhindert, dass das von der unter Druck stehenden Flüssigkeit in dem Förderweg auf den Exzenter ausgeübte Druckmoment den Exzenter tatsächlich eigenständig verschiebt bzw. dreht, wenn der Antrieb der Pumpe deaktiviert ist. Dies ist insbesondere vorteilhaft, um zwischen mehreren Dosiervorgängen mit der Vorrichtung den Druck in einer an den Auslass der Pumpe angeschlossenen Druckleitung aufrecht zu erhalten, ohne dass hierfür eine Aktivierung des Antriebs erforderlich ist. Daher ist die beschriebene Vorrichtung mit einem besonders geringen Energieeinsatz zu betreiben, gerade wenn kleine Dosiermengen Flüssigkeit angefordert werden und/oder wenn ein großer zeitlicher Abstand zwischen zwei Dosieranforderungen auftritt.

Weiterhin ist die Vorrichtung vorteilhaft, wenn die verformbare Membran zumindest an dem Pumpengehäuse oder an dem Exzenter mit einem Reibwert und einer Normalkraft anliegt und der Reibwert und die Normalkraft in dem (tangentialen) Reibungsmoment resultieren.

Zusätzlich können noch weitere Kräfte und/oder Momente innerhalb der Pumpe auftreten, die das beschriebene Reibungsmoment unterstützen. Die Erzeugung des Reibungsmoments mit Hilfe eines Reibkontakts kann wahlweise an einer Kontaktfläche zwischen der verformbaren Membran und dem Pumpengehäuse oder an einer Kontaktfläche zwischen der verformbaren Membran und dem Exzenter erfolgen, je nachdem, an welcher dieser beiden Kontaktflächen eine tangentiale Relativbewegung auftritt. Die Erzeugung des Reibungsmoments zwischen der Membran und dem Pumpengehäuse ist daher insbesondere für Pumpen geeignet, bei welchen der gesamte Exzenter gedreht wird und nicht in einen inneren Exzenterbereich und einen äußeren Lagerring mit dazwischen angeordnetem Lager aufgeteilt ist.

Weiterhin ist die Vorrichtung vorteilhaft, wenn der Exzenter mit einem inneren Exzenterbereich, einem äußeren Lagerring und einem dazwischen angeordnetem Lager aufgebaut ist, und das Reibungsmoment durch innere Reibung in dem Lager gebildet wird.

Eine derartige Aufteilung des Exzenters wurde bereits weiter oben beschrieben, so dass hierzu auch auf diese Beschreibung Bezug genommen wird. Die innere Reibung in dem Lager kann beispielsweise durch eine Kunststoffeinlage in dem Lager erzeugt werden, welche für die Lagerkörper des Lagers eine definierte Kraft erzeugt, die überwunden werden muss, damit das Lager eine Relativbewegung zulässt. Es ist auch möglich, dass das Reibungsmoment durch einen aufgerauhten Bereich der Lagerschalen oder eine vergleichbare Struktur erzeugt wird. Die Erzeugung des Reibungsmoments innerhalb des Lagers ist besonders gut nachträglich bei einer Pumpe erzeugbar. Dazu kann beispielsweise die beschriebene Kunststoffeinlage in das Lager eingebracht oder ein entsprechendes Lager mit einem definierten Abrollwiderstand eingesetzt werden.

Weiterhin ist die Vorrichtung vorteilhaft, wenn die mindestens eine Pumpe eine Antriebseinheit aufweist und das Reibungsmoment durch innere Reibung in der Antriebseinheit gebildet wird.

Die Antriebseinheit ist üblicherweise ein Elektromotor, an welchen der Exzenter über eine Achse angeschlossen ist und welcher den Exzenter für die Förderung in Bewegung versetzen kann. Die innere Reibung an der Antriebseinheit kann ebenfalls durch eine geeignete Einlage in der Antriebseinheit oder durch eine geeignete Gestaltung der Lagerungen der Antriebseinheit ausgestaltet sein. Die Antriebseinheit ist typischerweise ein Elektromotor. Auch ist möglich, dass das Reibungsmoment durch den Kontakt der elektrischen Kontakte innerhalb einer elektrischen Antriebseinheit gebildet wird. Damit das Reibungsmoment in der Antriebseinheit gebildet werden kann, ist vorgesehen, dass die Antriebseinheit entsprechend gestaltet ist. Hierfür ist es möglich, für die Pumpe eine Antriebseinheit zu verwenden, die ein inneres Reibungsmoment aufweist, welches den gegebenen Anforderungen entspricht.

Weiterhin ist die Vorrichtung vorteilhaft, wenn die maximale (tangentiale) Druckkraft aufgrund eines maximalen Arbeitsdrucks der mindestens einen Pumpe und eines maximal auftretenden Querschnitts des Förderwegs der mindestens einen Pumpe gebildet wird.

Der Querschnitt des Förderwegs wird durch den Spalt zwischen der verformbaren Membran und dem Pumpengehäuse definiert. Mit dem Spalt ist hier das mit Flüssigkeit gefüllte Volumen zwischen der verformbaren Membran und dem Pumpengehäuse gemeint. Die Stelle, an der dieser Spalt am breitesten ist, bildet den maximal auftretenden Querschnitt des Förderwegs. Der auf den Querschnitt wirkende Druck erzeugt die Kraft, welche das Druckmoment bewirkt.

Besonders bevorzugt ist die Vorrichtung, wenn der maximale Querschnitt des Förderwegs kleiner als 20 mm² [Quadratmillimeter] ist.

Weiterhin ist die Vorrichtung vorteilhaft, wenn der maximale Arbeitsdruck der Pumpe zwischen 5 bar und 10 bar liegt.

Wenn die Pumpe so gestaltet ist, dass der maximale Querschnitt des Förderwegs kleiner als 20 mm² ist, kann sichergestellt werden, dass das maximal auftretende Druckmoment bei üblichen Betriebsdrücken in einem Bereich von 5 bis 10 bar nicht größer ist als das Reibungsmoment, wobei das Reibungsmoment gleichzeitig so klein ist, dass der Antrieb des Exzenters der Pumpe mit einer verhältnismäßig geringen Antriebskraft möglich ist. Für das wirkende Druckmoment ist außerdem der Durchmesser der Pumpe relevant. Je größer der Durchmesser des Förderwegs zwischen der verformbaren Membran und dem Pumpengehäuse ist, umso größer ist das wirkende Drehmoment. Vorzugsweise ist der Durchmesser des Förderwegs kleiner als 80 mm [Millimeter] und liegt besonders bevorzugt zwischen 40 mm und 70 mm.

Weiterhin ist die Vorrichtung vorteilhaft, wenn zumindest einer der folgenden Parameter der mindestens einen Pumpe so ausgebildet ist, dass die tangentiale Reibungskraft bei einer Bewegung des Exzenters entgegen der Förderrichtung größer ist als bei einer Bewegung des Exzenters in Förderrichtung:
- ein Reibwert zwischen der zum Förderweg ausgerichteten Gehäuseoberfläche des Pumpengehäuses und der zum Förderweg ausgerichteten Membranoberfläche der verformbaren Membran;
- ein Reibwert zwischen der verformbaren Membran und dem Exzenter;
- ein Reibungsmoment in einem Lager des Exzenters der mindestens einen Pumpe; und
- ein Reibungsmoment in einer Antriebseinheit der mindestens einen Pumpe.

Während der regulären Förderung von Flüssigkeit von dem Tank hin zu einem Injektor wird der Exzenter in Förderrichtung bewegt. Daher ist es sinnvoll, wenn der Exzenter in dieser Bewegungsrichtung einen geringen Reibungswiderstand hat. Hierdurch kann der Energieverbrauch beim Betrieb der Pumpe minimiert werden. Eine Rückbewegung entgegen der Förderrichtung soll aus den oben erläuterten Gründen trotzdem vermieden werden. Daher muss das Reibungsmoment in dieser Richtung eine (erhöhte) Mindestgröße haben. Eine zusätzliche Anforderung kann sein, dass eine Bewegung des Exzenters entgegen der Förderrichtung zum Rücksaugen der Flüssigkeit bzw. zum Entleeren des Förderwegs gleichwohl ermöglicht sein soll. Bei einer Entleerung wird die Pumpe entgegen der Förderrichtung betrieben, um durch die Zugabevorrichtung bzw. durch den Injektor hindurch Luft in die Vorrichtung hinein zu saugen und die Flüssigkeit aus der Vorrichtung hinaus zu fördern. Im Verhältnis zur Förderung ist ein Rücksaugen jedoch nur verhältnismäßig selten erforderlich, so dass ein erhöhter Energieverlust beim Rücksaugen durch den erhöhten Reibungswert akzeptabel ist.

Gewünscht wird, dass ein geeigneter Kompromiss zwischen einer hohen Sicherheit gegenüber einer nicht gewollten Bewegung des Exzenters und der gleichzeitigen Gewährleitung der Möglichkeit des Rücksaugens durch die entsprechende Ausbildung des Reibungsmoments gewährleistet ist.

Weiterhin ist die Vorrichtung vorteilhaft, wenn zumindest an einer der folgenden Positionen innerhalb der mindestens einen Pumpe eine Widerhakenstruktur vorgesehen ist, um zu bewirken, dass das Reibungsmoment entgegen der Förderrichtung größer ist als in Förderrichtung:
- an einer zum Förderweg ausgerichteten Gehäuseoberfläche des Pumpengehäuses;
- an einer zum Förderweg ausgerichteten Membranoberfläche der verformbaren Membran;
- an einer zum Exzenter hin ausgerichteten Membranoberfläche der verformbaren Membran;
- an einer zur verformbaren Membran hin ausgerichteten Oberfläche des Exzenters;
- in einem Lager des Exzenters der mindestens einen Pumpe; und
- in einer Antriebeinheit der mindestens einen Pumpe.

Eine Widerhakenstruktur ist vorzugsweise so ausgebildet, dass diese nicht absolut fest verhakt, wenn der Antrieb der Pumpe bzw. der Exzenter entgegen der Förderrichtung bewegt wird. Die Widerhaken stellen lediglich einen erhöhten Widerstand gegen eine Bewegung entgegen der Förderrichtung dar. Dies kann beispielsweise dadurch realisiert werden, dass die Widerhaken umklappen, sobald die wirkende Kraft einen Grenzwert überschreitet und dann eine Bewegung entgegen der Förderrichtung zulassen, wobei die bei der Bewegung tatsächlich auftretende Widerstandskraft gegenüber der im Stillstand wirkenden Widerstandskraft gegen die Bewegung sogar reduziert sein kann. Die Widerhaken können beispielsweise als eine Art Sägezahnstruktur einer Oberfläche ausgestaltet sein, die leicht überfahren werden kann in Förderrichtung und schwere überfahren werden kann entgegen der Förderrichtung.

Weiter wird ein Kraftfahrzeug vorgeschlagen, zumindest aufweisend eine Verbrennungskraftmaschine, eine Abgasbehandlungsvorrichtung zur Reinigung der Abgase der Verbrennungskraftmaschine und eine Vorrichtung zur Förderung einer Flüssigkeit zu der Abgasbehandlungsvorrichtung, wobei die Flüssigkeit Harnstoff-Wasser-Lösung ist.

In der Abgasbehandlungsvorrichtung ist vorzugsweise ein SCR-Katalysator vorgesehen, mit welchem Stickstoffoxidverbindungen im Abgas der Verbrennungskraftmaschine unter Zuhilfenahme der Flüssigkeit reduziert werden können. Die Vorrichtung in dem Kraftfahrzeug kann sämtliche hier beschriebenen Vorrichtungsmerkmale aufweisen. Das Kraftfahrzeug weist vorzugsweise auch ein Steuergerät auf, welches zumindest an die mindestens eine Pumpe der Vorrichtung und ggf. auch an einen Injektor zur Zugabe der Flüssigkeit zu einer Abgasbehandlungsvorrichtung angeschlossen ist und mit welchem ein Dosierverfahren zur Dosierung von Flüssigkeit in die Abgasbehandlungsvorrichtung mit Hilfe der Vorrichtung durchgeführt werden kann. Das Steuergerät hat dazu vorzugsweise entsprechende hinterlegte Programmroutinen.

Die Erfindung sowie das technische Umfeld werden nachfolgend anhand der Figuren näher erläutert. Die Figuren zeigen besondere Ausführungsbeispiele, auf welche die Erfindung jedoch nicht begrenzt ist. Insbesondere ist darauf hinzuweisen, dass die Figuren und vor allem die in den Figuren dargestellten Größenverhältnisse nur schematisch sind. Es zeigen:
- Fig. 1:: eine Pumpe für eine beschriebene Vorrichtung,
- Fig. 2:: eine beschriebene Vorrichtung,
- Fig. 3:: ein Kraftfahrzeug aufweisend eine beschriebene Vorrichtung,
- Fig. 4:: eine schematische Darstellung eines Reibkontakts innerhalb einer beschriebenen Vorrichtung,
- Fig. 5:: eine zweite Ausführungsvariante einer Pumpe für eine beschriebene Vorrichtung,
- Fig. 6:: eine dritte Ausführungsvariante einer Pumpe für eine beschriebene Vorrichtung,
- Fig. 7:: eine vierte Ausführungsvariante einer Pumpe für eine beschriebene Vorrichtung, und
- Fig. 8:: eine schematische Darstellung einer Antriebseinheit einer Pumpe.

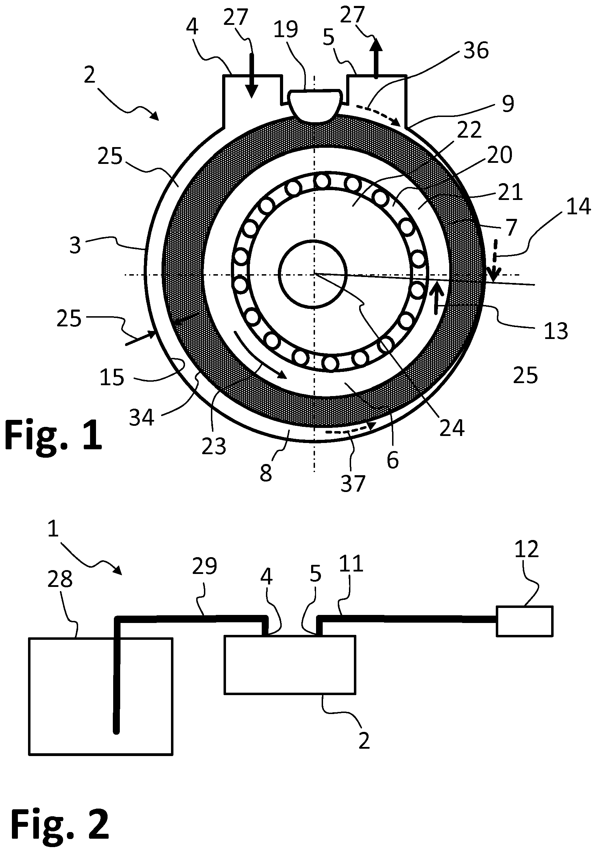

In Fig. 1 ist eine Pumpe 2 dargestellt, welche ein Pumpengehäuse 3 mit einem Einlass 4 und einem Auslass 5 aufweist. Innerhalb des Pumpengehäuses 3 ist ein Exzenter 6 angeordnet. Zwischen dem Exzenter 6 und dem Pumpengehäuse 3 befindet sich die verformbare Membran 7. Zwischen der verformbaren Membran 7 und dem Pumpengehäuse 3 existiert ein Förderweg 8, der von dem Einlass 4 zu dem Auslass 5 verläuft. Der Förderweg 8 ist an einer Stelle durch eine Abdichtung 9 abgedichtet (verschlossen). An der Abdichtung 9 liegt die verformbare Membran 7 direkt an dem Pumpengehäuse 3 an. Durch eine exzentrische Bewegung des Exzenters 6 kann die Abdichtung 9 verschoben werden. Dadurch geschieht eine Förderung der Flüssigkeit mit einer Förderrichtung 27 von dem Einlass 4 zu dem Auslass 5. Der Exzenter 6 ist in einen inneren Exzenterbereich 22 und in einen äußeren Lagerring 21 aufgeteilt. Der innere Exzenterbereich 22 ist von dem äußeren Lagerring 21 durch ein Lager 20 getrennt. Wenn der Exzenterbereich 22 mit einer der Förderrichtung 27 entsprechenden Drehrichtung 23 um die Achse 24 gedreht wird, vollführt der Lagerring 21 die beschriebene exzentrisehe Bewegung. Zwischen dem Einlass 4 und dem Auslass 5 ist eine (ortsfeste, permanente) Trennung 19 vorgesehen, die hier als Nocke ausgeführt ist, welche die verformbare Membran 7 lokal zusammendrückt. Diese Trennung 19 verhindert eine Rückströmung der Flüssigkeit von dem Auslass 5 zurück zu dem Einlass 4.

Innerhalb des Förderwegs 8 liegt die Flüssigkeit während des Betriebs mit einem bestimmten Druck vor. Dieser Druck ist in den Bereichen des Förderwegs 8, welche mit dem Einlass 4 in Verbindung stehen, erheblich geringer als mit den Bereichen des Förderwegs 8, welche mit dem Auslass 5 in Verbindung stehen.

Bei der Darstellung einer Ausführungsvariante der Pumpe 2 gemäß Fig. 1 wirkt in einem Teil des Förderwegs 8, der mit dem Auslass 5 der Pumpe 2 in Verbindung steht, eine Auslassdruckkraft 36. In einem Teil des Förderwegs 8, der mit einem Einlass 4 der Pumpe in Verbindung steht, wirkt eine Einlassdruckkraft 37. Die Einlassdruckkraft 37 ist wesentlich kleiner als die Auslassdruckkraft 36, weil der Druck in dem Teil des Förderwegs 8, der mit dem Einlass 4 verbunden ist, wesentlich geringer ist als der Druck in dem Teil des Förderwegs 8, welcher mit dem Auslass 5 in Verbindung steht. Daher ergibt sich ein resultierendes Druckmoment 14. Diesem resultierenden Druckmoment 14 wirkt ein Reibungsmoment 13 entgegen. Wie das Reibungsmoment 13 im Detail erzeugt wird, ist in Fig. 1 nicht dargestellt. Das Reibungsmoment 13 kann beispielsweise das Resultat einer inneren Reibung in dem Lager 20 und/oder das Resultat einer inneren Reibung in dem hier nicht dargestellten Antrieb der Pumpe 2 sein, welcher über die Achse 24 mit dem in Fig. 1 dargestellten Teil der Pumpe 2 in Verbindung steht.

Fig. 2 zeigt eine Vorrichtung 1 zur dosierten Bereitstellung einer Flüssigkeit, aufweisend eine (einzige) Pumpe 2, die über eine (einzige) Saugleitung 29 mit einem Tank 28 in Verbindung steht, wobei die Saugleitung 29 an einen (einzigen) Einlass 4 der Pumpe angeschlossen ist. Darüber hinaus weist die Vorrichtung einen (einzigen) Injektor 12 zur dosierten Abgabe der Flüssigkeit auf, der über eine (einzige, verzweigungsfreie) Druckleitung 11 an einen (einzigen) Auslass 5 der Pumpe 2 angeschlossen ist.

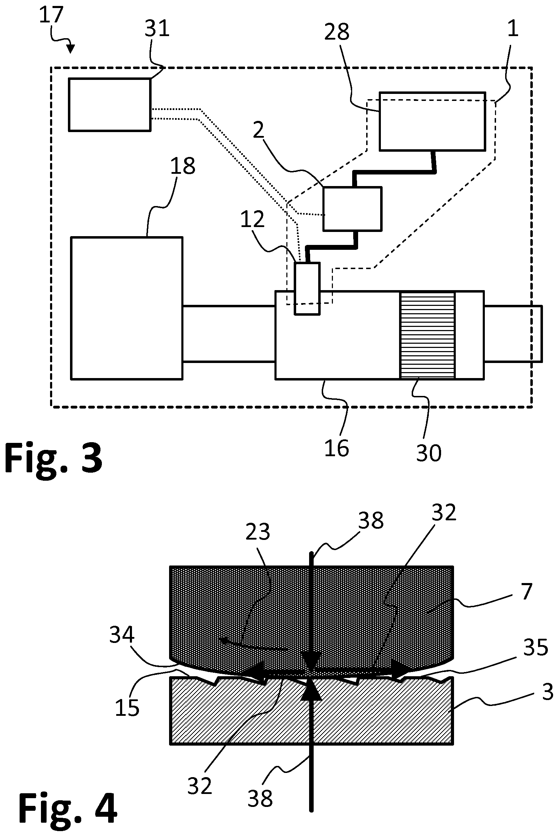

In Fig. 3 ist ein Kraftfahrzeug 17 dargestellt, welches eine Verbrennungskraftmaschine 18 und eine Abgasbehandlungsvorrichtung 16 aufweist. Die Abgasbehandlungsvorrichtung 16 reinigt die Abgase der Verbrennungskraftmaschine 18 und weist dazu einen SCR-Katalysator 30 auf, mit dem das Verfahren der selektiven katalytischen Reduktion durchgeführt werden kann. Dazu wird die Abgasbehandlungsvorrichtung 16 von einer Vorrichtung 1 mit Flüssigkeit zur Abgasreinigung (insbesondere Harnstoff-Wasser-Lösung) versorgt, wobei die Vorrichtung 1 eine Pumpe 2 aufweist, die die Flüssigkeit von dem Tank 28 zu dem Injektor 12 fördert. Die Pumpe 2 und der Injektor 12 sind an ein Steuergerät 31 des Kraftfahrzeugs 17 angeschlossen. In dem Steuergerät 31 können Steuerroutinen hinterlegt sein, mit denen der Betrieb der Vorrichtung 1 gesteuert wird.

Fig. 4 veranschaulicht schematisch einen Reibkontakt, wie er beispielsweise zwischen der verformbaren Membran 7 und dem Pumpengehäuse vorliegen kann. Das Pumpengehäuse 3 hat eine Gehäuseoberfläche 15 und die verformbare Membran 7 hat eine Membranoberfläche 34. Die verformbare Membran 7 und das Pumpengehäuse 3 sind mit einer Normalkraft 38 aufeinander gedrückt. Darüber hinaus existiert zwischen der Membranoberfläche 34 und der Gehäuseoberfläche 15 ein Reibungswert. Durch eine Widerhakenstruktur 35 an der Membranoberfläche 34 ist gewährleistet, dass dieser Reibungswert in Drehrichtung 23 kleiner ist als entgegen der Drehrichtung 23, so dass die jeweils resultierende Reibungskraft 32 in Drehrichtung 23 kleiner ist als entgegen der Drehrichtung 23. Die in Fig. 4 gezeigte Darstellung eines Reibkontaktes ist für sämtliche mögliche Anordnungen einer Widerhakenstruktur 35 an dem Pumpengehäuse 3, dem Exzenter 6 und an der verformbaren Membran 7 anwendbar.

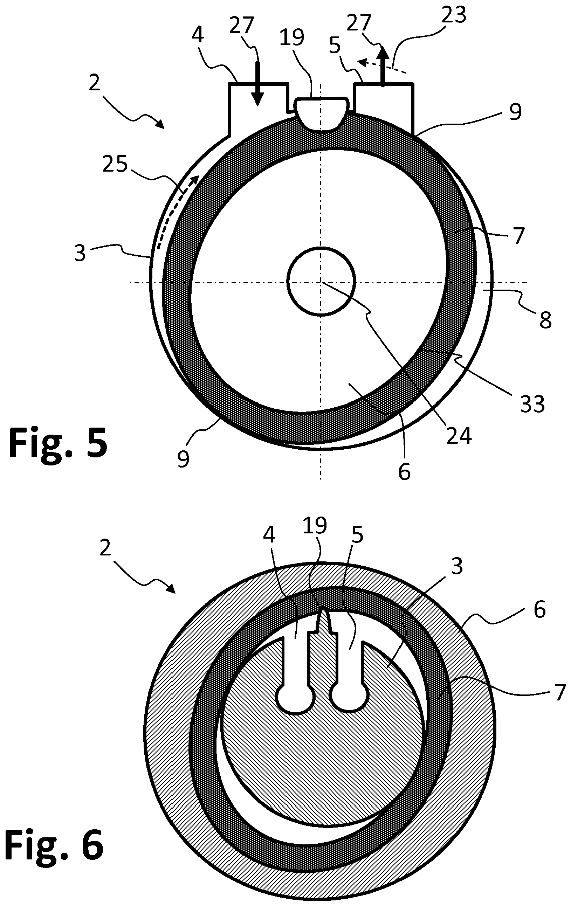

Fig. 5 zeigt eine zweite Ausführungsvariante einer Pumpe 2 für eine beschriebene Vorrichtung, die sich von der in Fig. 1 dargestellten Pumpe dadurch unterscheidet, wobei der Exzenter 6 und die verformbare Membran 7 zwei Abdichtungen 9 ausbilden, welche durch eine Rotationsbewegung des Exzenters 6 relativ zu dem Pumpengehäuse 3 entlang des Förderwegs 8 bewegt werden. Bei dieser Pumpe 2 ist allerdings keine Aufteilung des Exzenters 6 in einen Lagerring und einen Exzenterbereich gegeben. Der Exzenter 6 dreht sich bei dieser Ausführungsvariante derart, dass an einer Kontaktfläche 33 zwischen dem Exzenter 6 und der verformbaren Membran 7 definierte Reibungskräfte auftreten, die durch eine entsprechende Gestaltung der Kontaktfläche 33 vermieden werden.

Fig. 6 zeigt stark vereinfacht eine weitere Ausführungsvariante einer Pumpe 2, bei der das Pumpengehäuse 3 innen und der Exzenter 6 außen um das Pumpengehäuse 3 herum angeordnet ist. Auch hier befindet sich die verformbare Membran 7 zwischen dem Pumpengehäuse 3 und dem Exzenter 6. Der Einlass 4 und der Auslass 5 sind an dem Pumpengehäuse 3 angeordnet und es existiert eine (ortsfeste, permanente) Trennung 19 zur Verhinderung einer Rückströmung der Flüssigkeit von dem Auslass 5 zu dem Einlass 4.

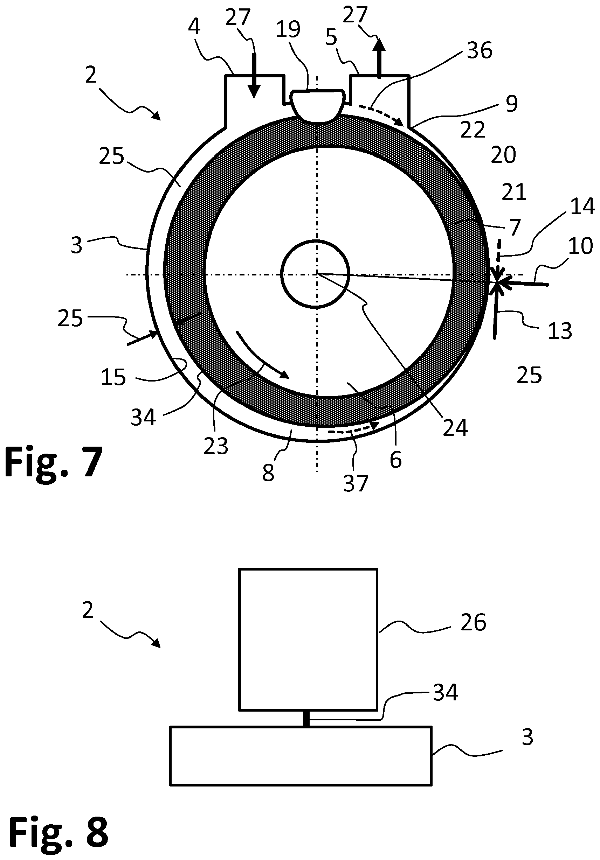

Fig. 7 zeigt eine vierte Ausführungsvariante einer Pumpe 2, bei welcher der Exzenter 6 nicht in einen Exzenterbereich und einen Lagerring mit dazwischen angeordnetem Lager aufgeteilt ist. Die verformbare Membran 7 reibt dabei direkt an dem Pumpengehäuse 3, so dass ein Reibkontakt zwischen der verformbaren Membran 7 und dem Pumpengehäuse 3 besteht, welcher das Reibungsmoment bewirkt.

In Fig. 8 ist die Pumpe 2 vereinfacht und schematisch dargestellt. Hier ist zu erkennen, dass die Pumpe das Pumpengehäuse 3 aufweist, in welchem der Exzenter (hier nicht dargestellt) angeordnet ist. Der Exzenter ist über die Achse 24 mit der Antriebseinheit 26 der Pumpe verbunden.

Vorsorglich sei noch darauf hingewiesen, dass die in den Figuren gezeigten Kombinationen von technischen Merkmalen nicht generell zwingend sind. So können technische Merkmale einer Figur mit anderen technischen Merkmalen einer weiteren Figur und/oder der allgemeinen Beschreibung kombiniert werden. Etwas anderes soll nur gelten, wenn hier explizit die Kombination von Merkmalen ausgewiesen wurde und/oder der Fachmann erkennt, dass sonst die Grundfunktionen der Vorrichtung nicht mehr erfüllt werden können.

Die beschriebene Vorrichtung ermöglicht eine besonders genaue Dosierung von Flüssigkeit und insbesondere auch kleiner Mengen der Flüssigkeit. Gleichzeitig ist die Vorrichtung besonders kostengünstig und benötigt für die Förderung und Dosierung besonders wenig Energie.

### Bezugszeichenliste

- 1: Vorrichtung
- 2: Pumpe
- 3: Pumpengehäuse
- 4: Einlass
- 5: Auslass
- 6: Exzenter
- 7: verformbare Membran
- 8: Förderweg
- 9: Abdichtung
- 10: Normalkraft
- 11: Druckleitung
- 12: Injektor
- 13: Reibungsmoment
- 14: Druckmoment
- 15: Gehäuseoberfläche
- 16: Abgasbehandlungsvorrichtung
- 17: Kraftfahrzeug
- 18: Verbrennungskraftmaschine
- 19: Trennung
- 20: Lager
- 21: Lagerring
- 22: Exzenterbereich
- 23: Drehrichtung
- 24: Achse
- 25: Querschnitt
- 26: Antriebseinheit
- 27: Förderrichtung
- 28: Tank
- 29: Saugleitung
- 30: SCR-Katalysator
- 31: Steuergerät
- 32: Reibungskraft
- 33: Kontaktfläche
- 34: Membranoberfläche
- 35: Widerhakenstruktur
- 36: Auslassdruckkraft
- 37: Einlassdruckkraft
- 38: Normalkraft

## Patentansprüche

1. Vorrichtung (1) zur dosierten Bereitstellung einer Flüssigkeit, zumindest aufweisend mindestens eine Pumpe (2) zur Förderung der Flüssigkeit, wobei die mindestens eine Pumpe (2) ein Pumpengehäuse (3) mit mindestens einem Einlass (4) und mindestens einem Auslass (5) aufweist, wobei an dem Pumpengehäuse (3) ein Exzenter (6) angeordnet ist und wobei zwischen dem Pumpengehäuse (3) und dem Exzenter (6) eine verformbare Membran (7) angeordnet ist, wobei die verformbare Membran (7) und das Pumpengehäuse (3) mindestens einen Förderweg (8) von dem mindestens einen Einlass (4) zu dem mindestens einen Auslass (5) begrenzen und mindestens eine Abdichtung (9) des Förderwegs (8) ausbilden, **dadurch gekennzeichnet, dass** zumindest an einer der folgenden Positionen innerhalb der mindestens einen Pumpe (2) eine Widerhakenstruktur (35) vorgesehen ist:
- an einer zum Förderweg (8) ausgerichteten Gehäuseoberfläche (15) des Pumpengehäuses (3);
- an einer zum Förderweg (8) ausgerichteten Membranoberfläche (34) der verformbaren Membran (7);
- an einer zum Exzenter (6) hin ausgerichteten Membranoberfläche der verformbaren Membran (7);
- an einer zur verformbaren Membran (7) hin ausgerichteten Oberfläche des Exzenters (6);
- in einem Lager (20) des Exzenters (6) der mindestens einen Pumpe (2); und
- in einer Antriebeinheit (26) der mindestens einen Pumpe (2), wobei
die mindestens eine Abdichtung (9) durch eine Bewegung des Exzenters (6) zur Förderung entlang des Förderwegs (8) mit einer Förderrichtung (27) von dem mindestens einen Einlass (4) zu dem mindestens einen Auslass (5) verschiebbar ist, wobei innerhalb der mindestens einen Pumpe (2) ein Reibungsmoment (13) auftritt, welches überwunden werden muss, damit der Exzenter (6) sich bewegt und das Reibungsmoment (13) größer ist als ein maximales Druckmoment (14), das durch unter Druck stehende Flüssigkeit in dem Förderweg (8) erzeugt werden kann, so dass eine Bewegung des Exzenters (6) entgegen der Förderrichtung (27) verhindert wird, wobei die Widerhakenstruktur dazu beiträgt, dass das Reibungsmoment (13) entgegen der Förderrichtung (27) größer ist als in Förderrichtung (27).

2. Vorrichtung (1) nach Patentanspruch 1, wobei die verformbare Membran (7) zumindest an dem Pumpengehäuse (3) oder an dem Exzenter (6) mit einem Reibwert und einer Normalkraft (10) anliegt und der Reibwert und die Normalkraft (10) in dem Reibungsmoment (13) resultieren.

3. Vorrichtung (1) nach einem der vorhergehenden Patentansprüche, wobei der Exzenter (6) mit einem inneren Exzenterbereich (22), einen äußeren Lagerring (21) und einem dazwischen angeordnetem Lager (20) aufgebaut ist, und das Reibungsmoment (13) durch innere Reibung in dem Lager (20) gebildet wird.

4. Vorrichtung (1) nach einem der vorhergehenden Patentansprüche, wobei die mindestens eine Pumpe (2) eine Antriebseinheit (26) aufweist, und das Reibungsmoment (13) durch innere Reibung in der Antriebseinheit (26) gebildet wird.

5. Vorrichtung (1) nach einem der vorhergehenden Patentansprüche, wobei das maximale Druckmoment (14) aufgrund eines maximalen Arbeitsdruck der mindestens einen Pumpe (2) und eines maximal auftretenden Querschnitts (25) des Förderwegs (8) der mindestens einen Pumpe (2) gebildet wird.

6. Vorrichtung (1) nach Patentanspruch 5, wobei der maximale Querschnitt (25) des Förderwegs (8) kleiner als 20 mm2 [Quadratmillimeter] ist.

7. Vorrichtung (1) nach Patentanspruch 5 oder 6, wobei der maximale Arbeitsdruck der mindestens einen Pumpe (2) zwischen 6 bar und 10 bar liegt.

8. Vorrichtung (1) nach einem der vorhergehenden Patentansprüche, wobei zumindest einer der folgenden Parameter der mindestens einen Pumpe (2) so ausgebildet ist, dass das Reibungsmoment (13) bei einer Bewegung des Exzenters (6) entgegen der Förderrichtung (27) größer ist als bei einer Bewegung des Exzenters (6) in Förderrichtung (27):
- ein Reibwert zwischen der zum Förderweg (8) ausgerichteten Gehäuseoberfläche (15) des Pumpengehäuses und der zum Förderweg (8) ausgerichtete Membranoberfläche (34) der verformbaren Membran (7);
- ein Reibwert zwischen der verformbaren Membran (7) und dem Exzenter (6);
- ein Reibungsmoment in einem Lager (20) des Exzenters (6) der mindestens einen Pumpe (2); und
- ein Reibungsmoment in einer Antriebseinheit (26) der mindestens einen Pumpe (2).

9. Kraftfahrzeug (17), zumindest aufweisend eine Verbrennungskraftmaschine (18), eine Abgasbehandlungsvorrichtung (16) zur Reinigung der Abgase der Verbrennungskraftmaschine (18) und eine Vorrichtung (1) zur Förderung einer Flüssigkeit zu der Abgasbehandlungsvorrichtung (16) nach einem der vorhergehenden Patentansprüche, wobei die Flüssigkeit Harnstoff-Wasser-Lösung ist.

## Claims

1. Device (1) for the dosed supply of a liquid, at least having at least one pump (2) for delivering the liquid, wherein the at least one pump (2) has a pump housing (3) with at least one inlet (4) and at least one outlet (5), wherein an eccentric (6) is arranged on the pump housing (3) and wherein a deformable diaphragm (7) is arranged between the pump housing (3) and the eccentric (6), wherein the deformable diaphragm (7) and the pump housing (3) delimit at least one delivery path (8) from the at least one inlet (4) to the at least one outlet (5) and form at least one seal (9) of the delivery path (8),
**characterized in that**
at least at one of the following positions within the at least one pump (2), a barb structure (35) is provided:
- on a housing surface (15), directed toward the delivery path (8), of the pump housing (3);
- on a diaphragm surface (34), directed toward the delivery path (8), of the deformable diaphragm (7);
- on a diaphragm surface, directed toward the eccentric (6), of the deformable diaphragm (7);
- on a surface, directed toward the deformable diaphragm (7), of the eccentric (6);
- in a bearing (20) of the eccentric (6) of the at least one pump (2); and
- in a drive unit (26) of the at least one pump (2), wherein
the at least one seal (9) is displaceable along the delivery path (8) in a delivery direction (27) from the at least one inlet (4) to the at least one outlet (5) by way of a movement of the eccentric (6) for the purposes of delivery, wherein, within the at least one pump (2), a friction torque (13) arises which must be overcome in order for the eccentric (6) to move, and the friction torque (13) is greater than a maximum pressure torque (14) which can be generated by pressurized liquid in the delivery path (8), such that a movement of the eccentric (6) counter to the delivery direction (27) is prevented, wherein the barb structure contributes to the fact that the friction torque (13) is greater counter to the delivery direction (27) than in the delivery direction (27).

2. Device (1) according to Patent Claim 1, wherein the deformable diaphragm (7) bears at least against the pump housing (3) or against the eccentric (6) with a friction coefficient and a normal force (10), and the friction coefficient and the normal force (10) result in the friction torque (13) .

3. Device (1) according to one of the preceding patent claims, wherein the eccentric (6) is constructed with an inner eccentric region (22), an outer bearing ring (21), and a bearing (20) arranged in between, and the friction torque (13) is formed by internal friction in the bearing (20).

4. Device (1) according to one of the preceding patent claims, wherein the at least one pump (2) has a drive unit (26), and the friction torque (13) is formed by internal friction in the drive unit (26).

5. Device (1) according to one of the preceding patent claims, wherein the maximum pressure torque (14) is formed on the basis of a maximum working pressure of the at least one pump (2) and a maximum encountered cross section (25) of the delivery path (8) of the at least one pump (2).

6. Device (1) according to Patent Claim 5, wherein the maximum cross section (25) of the delivery path (8) is smaller than 20 mm² [square millimeters].

7. Device (1) according to Patent Claim 5 or 6, wherein the maximum working pressure of the at least one pump (2) lies between 6 bar and 10 bar.

8. Device (1) according to one of the preceding patent claims, wherein at least one of the following parameters of the at least one pump (2) is configured such that the friction torque (13) is greater during a movement of the eccentric (6) counter to the delivery direction (27) than during a movement of the eccentric (6) in the delivery direction (27):
- a friction coefficient between that housing surface (15) of the pump housing which is directed toward the delivery path (8) and that diaphragm surface (34) of the deformable diaphragm (7) which is directed toward the delivery path (8);
- a friction coefficient between the deformable diaphragm (7) and the eccentric (6);
- a friction torque in a bearing (20) of the eccentric (6) of the at least one pump (2); and
- a friction torque in a drive unit (26) of the at least one pump (2).

9. Motor vehicle (17), at least having an internal combustion engine (18), an exhaust-gas treatment device (16) for the purification of the exhaust gases of the internal combustion engine (18), and a device (1) for delivering a liquid to the exhaust-gas treatment device (16) according to one of the preceding patent claims, wherein the liquid is urea-water solution.

## Revendications

1. Dispositif (1) pour fournir un liquide de manière dosée, au moins présentant au moins une pompe (2) pour refouler le liquide, l'au moins une pompe (2) présentant un boîtier de pompe (3) avec au moins une entrée (4) et au moins une sortie (5), un excentrique (6) étant disposé au niveau du boîtier de pompe (3) et une membrane déformable (7) étant disposée entre le boîtier de pompe (3) et l'excentrique (6), la membrane déformable (7) et le boîtier de pompe (3) délimitant au moins un trajet de refoulement (8) allant de l'au moins une entrée (4) à l'au moins une sortie (5) et constituant au moins une étanchéification (9) du trajet de refoulement (8),
**caractérisé en ce**
**qu'**une structure à barbillons (35) est prévue au niveau d'au moins l'une des positions suivantes à l'intérieur de l'au moins une pompe (2) :
- au niveau d'une surface de boîtier (15) du boîtier de pompe (3) orientée vers le trajet de refoulement (8) ;
- au niveau d'une surface de membrane (34) de la membrane déformable (7) orientée vers le trajet de refoulement (8) ;
- au niveau d'une surface de membrane de la membrane déformable (7) orientée vers l'excentrique (6) ;
- au niveau d'une surface de l'excentrique (6) orientée vers la membrane déformable (7) ;
- dans un palier (20) de l'excentrique (6) de l'au moins une pompe (2) ; et
- dans une unité d'entraînement (26) de l'au moins une pompe (2),
l'au moins une étanchéification (9) pouvant être déplacée par un déplacement de l'excentrique (6) en vue du refoulement le long du trajet de refoulement (8) avec un une direction de refoulement (27) allant de l'au moins une entrée (4) à l'au moins une sortie (5), un couple de friction (13) se produisant à l'intérieur de l'au moins une pompe (2), lequel doit être surmonté afin que l'excentrique (6) se déplace et le couple de friction (13) étant supérieur à un couple de pression maximal (14) qui peut être généré par le liquide sous pression dans le trajet de refoulement (8) de telle sorte qu'un déplacement de l'excentrique (6) dans le sens opposé à la direction de refoulement (27) soit empêché, la structure à barbillons contribuant au fait que le couple de friction (13) est plus grand dans le sens opposé à la direction de refoulement (27) que dans la direction de refoulement (27).

2. Dispositif (1) selon la revendication 1, dans lequel la membrane déformable (7) s'applique au moins contre le boîtier de pompe (3) ou contre l'excentrique (6) avec un coefficient de friction et une force normale (10) et le coefficient de friction et la force normale (10) résultent en le couple de friction (13).

3. Dispositif (1) selon l'une quelconque des revendications précédentes, dans lequel l'excentrique (6) est construit avec une région d'excentrique interne (22), une bague de palier externe (21) et un palier (20) disposé entre elles, et le couple de friction (13) est formé par friction interne dans le palier (20).

4. Dispositif (1) selon l'une quelconque des revendications précédentes, dans lequel l'au moins une pompe (2) présente une unité d'entraînement (26) et le couple de friction (13) est formé par friction interne dans l'unité d'entraînement (26).

5. Dispositif (1) selon l'une quelconque des revendications précédentes, dans lequel le couple de pression maximal (14) est formé sur la base d'une pression de travail maximale de l'au moins une pompe (2) et d'une section transversale maximale (25) du trajet de refoulement (8) de l'au moins une pompe (2).

6. Dispositif (1) selon la revendication 5, dans lequel la section transversale maximale (25) du trajet de refoulement (8) est inférieure à 20 mm² (millimètres carrés) .

7. Dispositif (1) selon la revendication 5 ou 6, dans lequel la pression de travail maximale de l'au moins une pompe (2) est comprise entre 6 bars et 10 bars.

8. Dispositif (1) selon l'une quelconque des revendications précédentes, dans lequel au moins l'un des paramètres suivants de l'au moins une pompe (2) est réalisé de telle sorte que le couple de friction (13) dans le cas d'un déplacement de l'excentrique (6) dans le sens opposé à la direction de refoulement (27) soit plus grand que dans le cas d'un déplacement de l'excentrique (6) dans la direction de refoulement (27) :
- un coefficient de friction entre la surface de boîtier (15) du boîtier de pompe orientée vers le trajet de refoulement (8) et la surface de membrane (34) de la membrane déformable (7) orientée vers le trajet de refoulement (8) ;
- un coefficient de friction entre la membrane déformable (7) et l'excentrique (6) ;
- un couple de friction dans un palier (20) de l'excentrique (6) de l'au moins une pompe (2) ; et
- un couple de friction dans une unité d'entraînement (26) de l'au moins une pompe (2).

9. Véhicule automobile (17), présentant au moins un moteur à combustion interne (18), un dispositif de traitement des gaz d'échappement (16) pour purifier les gaz d'échappement du moteur à combustion interne (18) et un dispositif (1) pour refouler un liquide vers le dispositif de traitement de gaz d'échappement (16) selon l'une quelconque des revendications précédentes, le liquide étant une solution d'urée et d'eau.
